# EUROPÄISCHE PATENTSCHRIFT

(11) **EP 3 546 087 B1**
(45) Veröffentlichungstag und Bekanntmachung des Hinweises auf die Patenterteilung: **15.09.2021**
(21) Anmeldenummer: 19164486.3
(22) Anmeldetag: 21.03.2019
(51) Int. Cl.: B22D 2/00, G01K 1/10, G01K 1/12, G01K 11/32, G02B 6/00

(54) **TEMPERATURSENSORANORDNUNG, VERFAHREN ZUM HERSTELLEN EINER TEMPERATURSENSORANORDNUNG UND BAUTEIL MIT EINER TEMPERATURSENSORANORDNUNG**
TEMPERATURE SENSOR ASSEMBLY, METHOD FOR MANUFACTURING A TEMPERATURE SENSOR ASSEMBLY AND COMPONENT WITH A TEMPERATURE SENSOR ASSEMBLY
DISPOSITIF CAPTEUR DE TEMPÉRATURE, PROCÉDÉ DE FABRICATION D'UN DISPOSITIF CAPTEUR DE TEMPÉRATURE ET COMPOSANT DOTÉ D'UN DISPOSITIF CAPTEUR DE TEMPÉRATURE

(30) Priorität: 29.03.2018 DE 102018204882; 19.10.2018 DE 102018217916
(43) Veröffentlichungstag der Anmeldung: 02.10.2019
(73) Patentinhaber: SMS Group GmbH, 40237 Düsseldorf (DE)
(72) Erfinder:
(74) Vertreter: Klüppel, Walter

(56) Entgegenhaltungen:
- WO-A1-2011/038876
- DE-B3-102014 223 639
- DE-U1-202011 004 622
- JP-A- 2004 093 695
- US-A1- 2009 074 348
- US-A1- 2010 086 265

## Beschreibung

Die Erfindung betrifft eine Temperatursensoranordnung zum Messen einer Temperatur eines Bauteilabschnitts eines Bauteils einer metallurgischen Anlage, aufweisend wenigstens einen Lichtwellenleiter mit in Längsrichtung des Lichtwellenleiters beabstandet zueinander an dem Lichtwellenleiter ausgebildeten Faser-Bragg-Gittern, wenigstens ein den Lichtwellenleiter mit radialem Spiel umlaufend umschließendes Schutzrohr aus einem Metall oder einer Metalllegierung, das zusammen mit dem darin eingeführten Lichtwellenleiter in eine Sensorbohrung an dem Bauteilabschnitt einführbar ist, und wenigstens einen Stecker zum Anschließen des Lichtwellenleiters an eine optoelektrische Sensorelektronik.

Zudem betrifft die Erfindung ein Bauteil für eine metallurgische Anlage, aufweisend wenigstens eine Sensorbohrung und wenigstens eine zumindest teilweise in die Sensorbohrung eingeführte Temperatursensoranordnung zum Messen einer Temperatur eines die Sensorbohrung aufweisenden Bauteilabschnitts des Bauteils.

Ferner betrifft die Erfindung ein Verfahren zum Herstellen einer Temperatursensoranordnung zum Messen einer Temperatur eines Bauteilabschnitts eines Bauteils einer metallurgischen Anlage, aufweisend die Schritte: Herstellen eines Lichtwellenleiters mit in Längsrichtung des Lichtwellenleiters beabstandet zueinander an dem Lichtwellenleiter ausgebildeten Faser-Bragg-Gittern; Herstellen eines Schutzrohrs aus einem Metall oder einer Metalllegierung; Einführen des Lichtwellenleiter mit radialem Spiel in das Schutzrohr; und Herstellen eines Steckers zum Anschließen des Lichtwellenleiters an eine optoelektrische Sensorelektronik. Temperatursensoranordnungen der eingangs genannten Art sind bekannt. Herkömmlich ist der mit dem Schutzrohr ummantelte Lichtwellenleiter mit den Faser-Bragg-Gittern über einen Spleiß mit einem Lichtwellenleiterkabel, dem sogenannten Patch-Kabel, verbunden. Das Patch-Kabel ist mit einem FC- oder APC-Stecker verbunden, der einen Koppelpunkt der Temperatursensoranordnung darstellt.

Eine solche herkömmliche Temperatursensoranordnung weist somit zwei Unterbrechungen in der Faser auf. Die eine Unterbrechung ist innerhalb der Verbindung zwischen dem Spleiß und dem Lichtwellenleiter mit den Faser-Bragg-Gittern gegeben. Die andere Unterbrechung ist zwischen dem Stecker und dem Patch-Kabel vorhanden. Durch den Spleiß entsteht folglich ein zusätzlicher temperaturempfindlicher Verbindungspunkt, der sich negativ auf die Signalqualität auswirkt und zusätzlichen Bauraum beansprucht. Die Spleiß-Verbindung kann zudem keine Zugbelastungen aufnehmen. Stattdessen würden Zugbelastungen zum Abreißen des Patch-Kabels und/oder Lichtwellenleiters und somit zum Defekt der Temperatursensoranordnung führen. Des Weiteren wird die Temperatursensoranordnung im Anwendungsfall üblicherweise in Bauteilen mit hohen Temperaturen eingesetzt. Diesen hohen Temperaturen können herkömmlich weder das Patch-Kabel noch der Spleiß standhalten.

DE 10 2014 223 639 B3 betrifft einen faseroptischen Sensor mit einem Schutzrohr, wobei der faseroptische Sensor derart in das Schutzrohr eingeschoben ist, dass sich in einem axialen Bereich des Schutzrohrs Sensorelemente des faseroptischen Sensors zur Temperaturerfassung befinden. Ein formveränderlicher Füllkörper ist im Wesentlichen achsenparallel zum faseroptischen Sensor in das Schutzrohr eingebracht. Für einen Messbetrieb durch Formänderung des Füllkörpers der in dem axialen Bereich zur Lagerung des faseroptischen Sensors verbleibende freie Innenquerschnitt des Schutzrohrs ist derart verringerbar, dass der faseroptische Sensor durch den Füllkörper gegen die Schutzrohrwand gedrückt wird. Zur Montage des faseroptischen Sensors im Schutzrohr und zur Entnahme des faseroptischen Sensors aus dem Schutzrohr durch Formänderung des Füllkörpers ist der im axialen Bereich zur Lagerung des faseroptischen Sensors verbleibende freie Innenquerschnitt des Schutzrohrs derart einstellbar, dass der faseroptische Sensor im Schutzrohr axial verschiebbar ist.

WO 2010 / 003 632 A1 betrifft eine Kokille zum Gießen von Metall, die mindestens eine Kokillen-Kupferplatte umfasst. Auf der Außenseite der Kokillen-Kupferplatte sind Nuten vorgesehen, in denen Lichtwellenleiterfasern zur Temperaturmessung angeordnet sind. Die Lichtwellenleiterfasern können mäanderförmig in den Nuten angeordnet sein. Es können mindestens zwei der Länge nach versetzte Lichtwellenleiterfasern in jeweils einer Nut angeordnet sein. Die Nuten können zwischen Kühlkanälen auf der Außenseite der Kokillen-Kupferplatte angeordnet sein.

WO 2015 / 169 388 A1 offenbart eine optische Faserkabel-Endadaptergruppe, die an einem faseroptischen Kabel vorgesehen ist, wobei das faseroptische Kabel ein äußeres Rohr und einen Metallmantel umfasst, der mindestens eine optische Faser umschließt, wobei das äußere Rohr extern zum Metallmantel angeordnet ist. Die Endadaptergruppe weist einen Endadapter aus Metall auf, der eine Grundform eines Trichters hat und ein hohles Inneres und ein erstes offenes Ende und ein zweites offenes Ende hat, von denen das erste offene Ende einen kleineren Durchmesser als das zweite offene Ende hat. Der Endadapter ist rund um den Metallmantel des faseroptischen Kabels angeordnet. Das erste offene Ende des Endadapters ist an die Außenfläche des Metallmantels in einem ersten Schweißbereich angeschweißt oder angelötet. Die Endadaptergruppe weist ferner eine erste Temperaturregelungsanordnung auf, die zwischen dem Metallmantel und der mindestens einen optischen Faser eingeführt ist.

DE 695 08 851 T2 betrifft ein Verfahren zum Verbinden zweier optischer Faserkabel unter Verwendung einer Metallhülse, wobei jedes optische Faserkabel eine mit einem Metallrohr ummantelte optische Faser besitzt. Es werden die optimalen Schweißbedingungen ermittelt durch: (a) Anbringen einer ersten Testmetallhülse an einem ersten Metallrohr, um einen Fügeabschnitt zu bilden, wobei die erste Testmetallhülse von der gleichen Art ist wie die Metallhülse, die zum Verbinden der Kabel verwendet wird, und das erste Metallrohr von der gleichen Art ist wie das Metallrohr, das die Faser umgibt; (b) Einbringen eines Sensors zum Messen der Temperaturen in dem ersten Metallrohr an einer Stelle, die dem Fügeabschnitt entspricht; (c) Verschweißen des Fügeabschnittes unter Änderung der Schweißbedingungen und Messen von Temperaturen, um eine optimale Schweißbedingung zu ermitteln; und des Weiteren fortfahren mit (d) Freilegen zweier optischer Fasern und zweier Metallrohre über vorbestimmte Längen an den jeweiligen Endstücken der zwei optischen Faserkabel, die miteinander zu verbinden sind; (e) Aufbringen der Metallhülse auf dem freigelegten Metallrohr eines der zwei optischen Faserkabel; (f) Verschmelzen der zwei optischen Fasern miteinander an den Endstücken der zwei optischen Faserkabel; (g) Bewegen der Metallhülse in eine Position über den freigelegten Metallrohren der zwei optischen Faserkabel; (h) Verschweißen der Metallhülse und der Metallrohre am gesamten Umfang unter der optimalen Schweißbedingung, die in Schritt (c) ermittelt wurde; (i) Aufbringen einer zweiten Testmetallhülse auf ein zweites Metallrohr, um einen Fügeabschnitt zu bilden, wobei die zweite Testmetallhülse von der gleichen Art ist wie die Metallhülse, die zum Verbinden der Kabel verwendet wird, und die zweite Metallhülse von der gleichen Art ist wie die Metallhülse, die die Faser umgibt; (j) Einbringen eines Sensors zum Messen von Temperaturen in dem zweiten Metallrohr an einer Stelle, die dem Fügeabschnitt entspricht; (k) Verschweißen des Fügeabschnitts unter der Schweißbedingung des Schrittes (h) während der Messung der Temperaturen durch den Sensor und (I) Bestätigen, dass das Verschweißen des Schritts (h) unter der gleichen Bedingung ausgeführt wurde wie die optimale Schweißbedingung.

EP 2 910 988 B1 offenbart einen Glasfaser-Steckverbinder mit einem Hauptkörper, einer Hülse und einem Stecker, wobei der Hauptkörper einen ersten Kubus und einen zweiten Kubus aufweist, die mittels Spritzgießen gebildet werden, wobei ein erster Hohlraum in dem ersten Kubus angeordnet ist und der erste Hohlraum verwendet wird, sich an eine Glasfaser-Unterbaugruppe anzupassen, die von einer ersten Endfläche des ersten Kubus eingeführt wird. Des Weiteren sind mindestens zwei hakenartige Strukturen mittels Spritzgießen an dem ersten Kubus gebildet, die sich von einer zweiten Endfläche, die zu der ersten Endfläche parallel ist, in den ersten Hohlraum erstrecken. Die hakenartigen Strukturen werden verwendet, die Glasfaser-Unterbaugruppe fest zu verriegeln, wenn die Glasfaser-Unterbaugruppe von der ersten Endfläche eingeführt wird. Ein erster Teil des zweiten Kubus wird in dem ersten Hohlraum des ersten Kubus aufgenommen und mittels Spritzgießen an dem ersten Kubus befestigt. Ein zweiter Teil des zweiten Kubus erstreckt sich entlang einer Axialrichtung und ragt aus dem ersten Kubus hervor, wobei die Axialrichtung eine Richtung von der ersten Endfläche zu der zweiten Endfläche angibt. Der zweite Kubus weist einen dritten Hohlraum auf, der entlang einer Axialrichtung verläuft, wobei der dritte Hohlraum verwendet wird, die Hülse aufzunehmen. Die hakenartigen Strukturen und der erste Teil des zweiten Kubus bilden einen ersten Freiraum, wobei der Freiraum zum Entformen verwendet wird und wobei eine erste Kerbe und eine quadratische Öffnung in dem dritten Hohlraum angeordnet sind und die erste Kerbe und die quadratische Öffnung konfiguriert sind, den Stecker zu verriegeln, wenn der Stecker in den dritten Hohlraum eingeführt wird. Weiterhin sind faseroptische Temperaturmessvorrichtungen aus US2009/074348 A1 und DE102014223639 B3 bekannt.

Eine Aufgabe der Erfindung ist es, eine temperaturbeständige, kompakte und kostengünstig herstellbare Temperatursensoranordnung mit verbesserter Signalqualität bereitzustellen. Zudem ist es eine Aufgabe der Erfindung, das Messen einer Temperatur eines Bauteilabschnitts eines Bauteils einer metallurgischen Anlage zu verbessern.

Diese Aufgabe wird durch die unabhängigen Patentansprüche 1 und 9 gelöst. Vorteilhafte Ausgestaltungen sind in der nachfolgenden Beschreibung, den abhängigen Patentansprüchen und den Figuren wiedergegeben, wobei diese Ausgestaltungen jeweils für sich genommen oder in Kombination von wenigstens zwei dieser Ausgestaltungen miteinander einen weiterbildenden, insbesondere auch bevorzugten oder vorteilhaften, Aspekt der Erfindung darstellen können. Ausgestaltungen der Temperatursensoranordnung können dabei Ausgestaltungen des Bauteils und des Verfahrens entsprechen, und umgekehrt, selbst wenn im Folgenden hierauf im Einzelfall nicht explizit hingewiesen wird.

Eine erfindungsgemäße Temperatursensoranordnung zum Messen einer Temperatur eines Bauteilabschnitts eines Bauteils einer metallurgischen Anlage weist wenigstens einen Lichtwellenleiter mit in Längsrichtung des Lichtwellenleiters beabstandet zueinander an dem Lichtwellenleiter ausgebildeten Faser-Bragg-Gittern, wenigstens ein den Lichtwellenleiter mit radialem Spiel umlaufend umschließendes Schutzrohr aus einem Metall oder einer Metalllegierung, das zusammen mit dem darin eingeführten Lichtwellenleiter in eine Sensorbohrung an dem Bauteilabschnitt einführbar ist, und wenigstens einen Stecker zum Anschließen des Lichtwellenleiters an eine optoelektrische Sensorelektronik auf, wobei der Stecker eine Verbindungshülse aus einem Metall oder einer Metalllegierung aufweist, durch die ein in den Stecker eigeführter Endabschnitt des Lichtwellenleiters hindurchgeführt ist und die mit dem Schutzrohr verschweißt ist, und wobei der Lichtwellenleiter direkt mit dem Stecker verbunden ist.

Erfindungsgemäß ist der Lichtwellenleiter mit den Faser-Bragg-Gittern nicht über einen Spleiß, sondern direkt mit dem Stecker verbunden. Hierdurch entfällt eine herkömmlich vorhandene Unterbrechung bzw. Störung in der Signalübertragung, wodurch die Signalqualität verbessert wird. Zudem ist die erfindungsgemäße Temperatursensoranordnung kompakter ausgebildet als eine herkömmliche Temperatursensoranordnung mit einem Spleiß. Das Weglassen des Spleißes und eines herkömmlichen Patch-Kabels ist zudem mit einer Kostenersparnis bei der Herstellung der erfindungsgemäßen Temperatursensoranordnung verbunden, da der Spleiß und das Patch-Kabel weder angeschafft, noch montiert werden müssen. Durch das Weglassen des Spleißes und des Patch-Kabels ist die erfindungsgemäße Temperatursensoranordnung zudem robuster bezüglich Zugbelastungen und temperaturbeständiger. Vorzugsweise weist die erfindungsgemäße Temperatursensoranordnung überwiegend oder ausschließlich temperaturbeständige Bauteile auf, so dass keine vor Hitze zu schützenden Bauteile, wie beispielsweise ein Patch-Kabel oder Spleiß, vorhanden sind. Insgesamt weist die erfindungsgemäße Temperatursensoranordnung folglich einen vereinfachten Aufbau auf.

Der Lichtwellenleiter weist die Faser-Bragg-Gitter an Orten auf, an denen mittels des Lichtwellenleiters eine Temperaturmessung erfolgen soll. Die Lage der Orte ist vorzugsweise an den jeweiligen Anwendungsfall angepasst. Der Lichtwellenleiter kann herkömmlich ausgebildet sein.

Das Schutzrohr kann beim Einführen in die Sensorbohrung um ein bestimmtes Ausmaß elastisch verformt bzw. komprimiert werden. Um hierbei die Eigenschaften des Lichtwellenleiters nicht zu beeinflussen, umschließt das Schutzrohr den Lichtwellenleiter umlaufend mit radialem Spiel, ist also als Ummantelung des Lichtwellenleiters ausgebildet. Das Schutzrohr kann aus einem Metall oder einer Metalllegierung, beispielsweise einem Stahl, insbesondere aus einem Edelstahl, hergestellt sein.

Der Stecker zum Anschließen des Lichtwellenleiters an eine optoelektrische Sensorelektronik ist vorzugsweise zumindest überwiegend aus temperaturbeständigen Bauteilen gebildet. Die Verbindungshülse des Steckers kann aus einem Metall, beispielsweise Aluminium, oder einer Metalllegierung, beispielsweise einem Stahl, insbesondere aus einem Edelstahl, hergestellt sein. Insbesondere kann die Verbindungshülse aus demselben Werkstoff hergestellt sein, aus dem auch dasjenige Bauteil des Steckers aufgebaut ist, mit dem die Verbindungshülse unmittelbar verschweißt ist. Das Verschweißen von Verbindungshülse und übrigem Stecker kann unter Verwendung irgendeiner herkömmlichen Schweißtechnik erfolgen.

Zum Messen einer Temperatur eines Bauteilabschnitts eines Bauteils einer metallurgischen Anlage wird der mit dem Schutzrohr ummantelte Lichtwellenleiter in eine Sensorbohrung an dem Bauteilabschnitt eingeführt. Das Bauteil kann beispielsweise ein Bauteil einer Plattenkokille oder Rohrkokille einer Stranggießanlage oder Blockgießanlage, eines Kupfer-Staves oder einer Abstichöffnung eines Elektroofens, eines Injector-Cooling-Blocks oder dergleichen sein.

Gemäß einer vorteilhaften Ausgestaltung ist die Verbindungshülse über eine Crimpverbindung oder eine Schweißverbindung mit dem übrigen Stecker verbunden. Eine Klebstoffverbindung wäre hingegen nicht ausreichend temperaturbeständig in dem üblichen Messbereich bis etwa 350 °C. Die Schweißverbindung ist in der Regel temperaturbeständiger als die Crimpverbindung.

Gemäß einer weiteren vorteilhaften Ausgestaltung ist der Stecker ein FC-Stecker oder ein APC-Stecker. Vorzugsweise ist der Stecker in einer Hochtemperaturausführung gegeben.

Gemäß einer weiteren vorteilhaften Ausgestaltung weist der Stecker eine Ferrule auf, die mit einem temperaturbeständigen Klebstoff in dem Stecker befestigt ist. Die Ferrule und der Klebstoff sind vorzugsweise vor Wärme geschützt innerhalb des Steckers angeordnet.

Gemäß einer weiteren vorteilhaften Ausgestaltung ist der Klebstoff ein UV-aushärtender Klebstoff oder ein Zweikomponenten-Epoxidharz.

Gemäß einer weiteren vorteilhaften Ausgestaltung weist der Stecker ein Knickschutzelement aus temperaturbeständigem Kunststoff auf. Hierdurch kann verhindert werden, dass auf das Schutzrohr im Verbindungsbereich zu der Verbindungshülse zu große Querkräfte ausgeübt werden, die die Verbindung zwischen dem Schutzrohr und der Verbindungshülse beeinträchtigen könnten.

Ein erfindungsgemäßes Bauteil für eine metallurgische Anlage weist wenigstens eine Sensorbohrung und wenigstens eine zumindest teilweise in die Sensorbohrung eingeführte Temperatursensoranordnung zum Messen einer Temperatur eines die Sensorbohrung aufweisenden Bauteilabschnitts des Bauteils auf, wobei die Temperatursensoranordnung nach einer der oben genannten Ausgestaltungen oder einem Kombination von wenigstens zwei dieser Ausgestaltungen miteinander ausgebildet ist.

Mit dem Bauteil sind die oben mit Bezug auf die Temperatursensoranordnung genannten Vorteile entsprechend verbunden. Das Schutzrohr mit dem darin eingeführten Lichtwellenleiter ist in die Sensorbohrung eingebracht, die beispielsweise als erodierte Sacklochbohrung ausgebildet ist. Das Bauteil kann beispielsweise ein Bauteil einer Plattenkokille oder Rohrkokille einer Stranggießanlage oder Blockgießanlage, eines Kupfer-Staves oder einer Abstichöffnung eines Elektroofens, eines Injector-Cooling-Blocks oder dergleichen sein.

Gemäß einer vorteilhaften Ausgestaltung ist die Sensorbohrung derart ausgebildet, dass das in die Sensorbohrung eingeführte Schutzrohr durch einen Kontakt mit einer die Sensorbohrung einfassenden Wandung des Bauteilabschnitts zumindest teilweise elastisch verformt ist. Die Sensorbohrung ist hiernach derart toleriert bzw. ausgebildet, dass das Schutzrohr eingeschoben werden kann und dabei geringfügig komprimiert bzw. elastisch verformt wird. Hierdurch wird das Schutzrohr mit einer Übergangs- bzw. Presspassung in der Sensorbohrung angeordnet. Dies stellt eine optimale Übertragung der Wärme von dem Bauteilabschnitt auf das Schutzrohr und somit die Temperatursensoranordnung sicher. Zudem sichert die leichte Komprimierung des Schutzrohrs das Schutzrohr in der Sensorbohrung. Das Schutzrohr kann dennoch unter Aufbringung größerer Zugkräfte wieder aus der Sensorbohrung herausgezogen werden. Die Ausbildung der entsprechend speziell tolerierten Sensorbohrung stellt eine kostengünstige und sichere Positionierung des Schutzrohrs bzw. der Temperatursensoranordnung sicher, die trotzdem Wartungsarbeiten auf einfache Art und Weise zulässt. Diese Vorteile werden verstärkt durch eine Erhöhung der Steifigkeit des Schutzrohrs. Ein Wärmestrom in dem Bauteilabschnitt wird durch eine relativ klein dimensionierte Sensorbohrung kaum beeinflusst.

Ein erfindungsgemäßes Verfahren zum Herstellen einer Temperatursensoranordnung zum Messen einer Temperatur eines Bauteilabschnitts eines Bauteils einer metallurgischen Anlage umfasst die Schritte:
- Herstellen eines Lichtwellenleiters mit in Längsrichtung des Lichtwellenleiters beabstandet zueinander an dem Lichtwellenleiter ausgebildeten Faser-Bragg-Gittern;
- Herstellen eines Schutzrohrs aus einem Metall oder einer Metalllegierung;
- Einführen des Lichtwellenleiter mit radialem Spiel in das Schutzrohr; und
- Herstellen eines Steckers zum Anschließen des Lichtwellenleiters an eine optoelektrische Sensorelektronik,
- wobei der Stecker mit einer Verbindungshülse aus einem Metall oder einer Metalllegierung hergestellt wird, durch die ein in den Stecker eigeführter Endabschnitt des Lichtwellenleiters hindurchgeführt wird und die mit dem Schutzrohr verschweißt wird, und
- wobei der Lichtwellenleiter direkt mit dem Stecker verbunden wird.

Mit dem Verfahren sind die oben mit Bezug auf die Temperatursensoranordnung genannten Vorteile entsprechend verbunden. Insbesondere kann die Temperatursensoranordnung gemäß einer der oben genannten Ausgestaltungen oder einer Kombination von wenigstens zwei dieser Ausgestaltungen miteinander unter Verwendung des Verfahrens hergestellt werden.

Der Lichtwellenleiter mit den Faser-Bragg-Gittern kann auf herkömmliche Art und Weise hergestellt werden. Das Schutzrohr kann beispielsweise aus einem Edelstahl hergestellt werden. Der Stecker kann zumindest überwiegend aus metallischen Bauteilen hergestellt werden.

Gemäß einer vorteilhaften Ausgestaltung wird die Verbindungshülse durch Laserschweißen mit dem Schutzrohr verschweißt. Hierdurch kann eine sehr feine Schweißnaht ausgebildet und ein Verzug der Verbindungshülse und/oder des Schutzrohrs möglichst gering gehalten werden.

Gemäß einer weiteren vorteilhaften Ausgestaltung wird das Schutzrohr aus einem kalt gezogenen Material hergestellt. Hierdurch kann die Steifigkeit des Schutzrohrs erhöht werden, was insbesondere bei beabsichtigter elastischer Verformung des Schutzrohrs bei dessen Einführung in eine Sensorbohrung von Vorteil ist.

Gemäß einer vorteilhaften Ausgestaltung wird die Verbindungshülse über eine Crimpverbindung oder eine Schweißverbindung mit dem übrigen Stecker verbunden.

Im Folgenden wird die Erfindung unter Bezugnahme auf die anliegenden Figuren anhand bevorzugter Ausführungsformen beispielhaft erläutert, wobei die nachfolgend erläuterten Merkmale sowohl jeweils für sich genommen als auch in Kombination von wenigstens zwei dieser Merkmale miteinander einen vorteilhaften oder weiterbildenden Aspekt der Erfindung darstellen können. Es zeigen:
- Figur 1:: eine schematische Seitenansicht eines Ausführungsbeispiels für eine erfindungsgemäße Temperatursensoranordnung;
- Figur 2:: einen schematischen Querschnitt der in Figur 1 gezeigten Temperatursensoranordnung; und
- Figur 3:: einen schematischen Querschnitt eines Ausführungsbeispiels für ein erfindungsgemäßes Bauteil.

In den Figuren sind gleiche bzw. funktionsgleiche Bauteile mit denselben Bezugszeichen versehen. Eine wiederholte Beschreibung dieser Bauteile kann weggelassen sein.

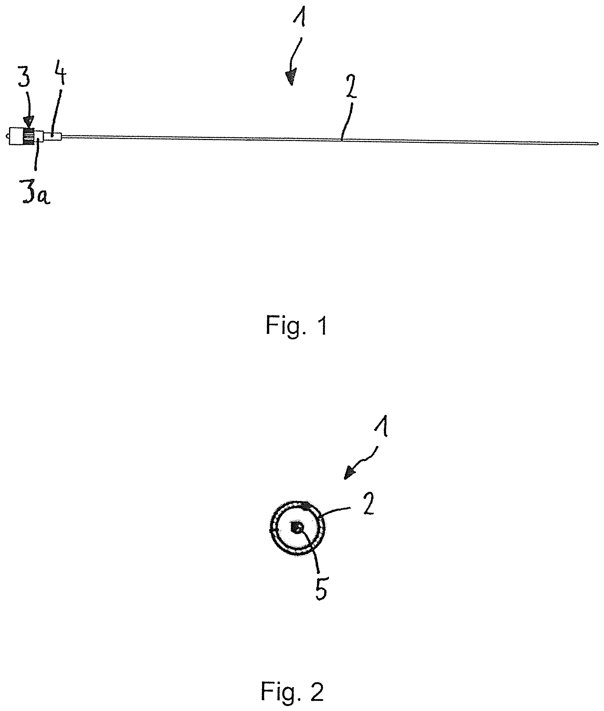

Figur 1 zeigt eine schematische Seitenansicht eines Ausführungsbeispiels für eine erfindungsgemäße Temperatursensoranordnung 1 zum Messen einer Temperatur eines nicht gezeigten Bauteilabschnitts eines nicht gezeigten Bauteils einer nicht gezeigten metallurgischen Anlage.

Die Temperatursensoranordnung 1 weist einen in Figur 2 gezeigten Lichtwellenleiter mit in Längsrichtung des Lichtwellenleiters beabstandet zueinander an dem Lichtwellenleiter ausgebildeten, nicht gezeigten Faser-Bragg-Gittern auf.

Zudem weist die Temperatursensoranordnung 1 ein den Lichtwellenleiter mit radialem Spiel umlaufend umschließendes Schutzrohr 2 aus einem Metall oder einer Metalllegierung auf, das zusammen mit dem darin eingeführten Lichtwellenleiter in eine nicht gezeigte Sensorbohrung an dem Bauteilabschnitt einführbar ist.

Des Weiteren weist die Temperatursensoranordnung 1 einen Stecker 3 zum Anschließen des Lichtwellenleiters an eine nicht gezeigte optoelektrische Sensorelektronik auf.

Der Stecker 3 weist eine Verbindungshülse 4 aus einem Metall oder einer Metalllegierung auf, durch die ein in den Stecker 3 eigeführter Endabschnitt des Lichtwellenleiters hindurchgeführt ist und die mit dem Schutzrohr 2 verschweißt ist. Die Verbindungshülse 4 ist über eine Schweißverbindung mit dem übrigen Stecker 3a verbunden. Der Stecker 3 ist ein FC-Stecker oder ein APC-Stecker. Der Stecker 3 kann eine nicht gezeigte Ferrule aufweisen, die mit einem temperaturbeständigen Klebstoff in dem Stecker 3 befestigt sein kann. Der Klebstoff kann ein UV-aushärtender Klebstoff oder ein Zweikomponenten-Epoxidharz sein.

Figur 2 zeigt einen schematischen Querschnitt der in Figur 1 gezeigten Temperatursensoranordnung 1 im Bereich des Schutzrohrs 2. Es ist der Lichtwellenleiter 5 gezeigt, der mit einem radialen Abstand, also mit radialem Spiel, von dem Schutzrohr 2 ummantelt ist.

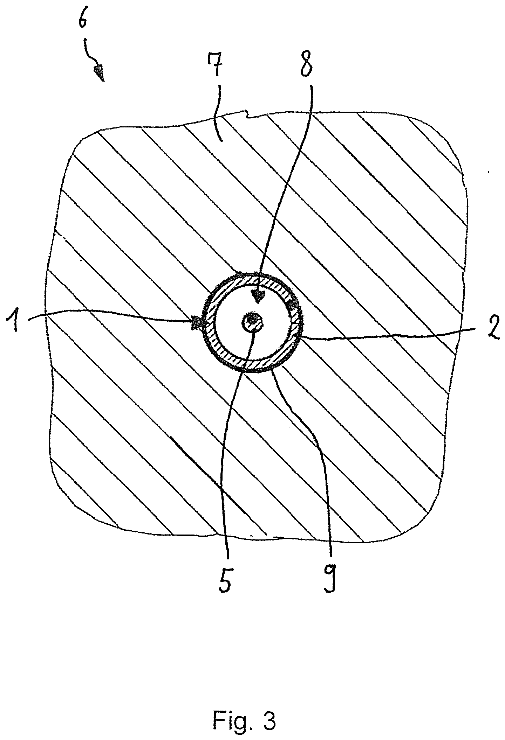

Figur 3 zeigt einen schematischen Querschnitt eines Ausführungsbeispiels für ein erfindungsgemäßes Bauteil 6 für eine nicht gezeigte metallurgische Anlage.

Das Bauteil 6 weist einen Bauteilabschnitt 7 mit einer Sensorbohrung 8 und eine teilweise in die Sensorbohrung 8 eingeführte Temperatursensoranordnung 1 zum Messen einer Temperatur des die Sensorbohrung 8 aufweisenden Bauteilabschnitts 7 des Bauteils 6 auf. Die Temperatursensoranordnung ist gemäß den Figuren 1 und 2 aufgebaut, weshalb zur Vermeidung von Wiederholungen auf die obige Beschreibung zu den Figuren 1 und 2 verwiesen wird.

Die Sensorbohrung 8 ist derart ausgebildet, dass das in die Sensorbohrung 8 eingeführte Schutzrohr 2 durch einen Kontakt mit einer die Sensorbohrung 8 einfassenden Wandung 9 des Bauteilabschnitts 7 zumindest teilweise elastisch verformt ist.

### Bezugszeichenliste

- 1: Temperatursensoranordnung
- 2: Schutzrohr
- 3: Stecker
- 3a: übriger Stecker
- 4: Verbindungshülse
- 5: Lichtwellenleiter
- 6: Bauteil
- 7: Bauteilabschnitt von 6
- 8: Sensorbohrung an 7
- 9: Wandung von 7

## Patentansprüche

1. Temperatursensoranordnung (1) zum Messen einer Temperatur eines Bauteilabschnitts (7) eines Bauteils (6) einer metallurgischen Anlage, aufweisend
- wenigstens einen Lichtwellenleiter (5) mit in Längsrichtung des Lichtwellenleiters (5) beabstandet zueinander an dem Lichtwellenleiter (5) ausgebildeten Faser-Bragg-Gittern,
- wenigstens ein den Lichtwellenleiter (5) mit radialem Spiel umlaufend umschließendes Schutzrohr (2) aus einem Metall oder einer Metalllegierung, das zusammen mit dem darin eingeführten Lichtwellenleiter (5) in eine Sensorbohrung (8) an dem Bauteilabschnitt (7) einführbar ist; und
- wenigstens einen Stecker (3) zum Anschließen des Lichtwellenleiters (5) an eine optoelektrische Sensorelektronik,
**dadurch gekennzeichnet, dass**
- der Stecker (3) eine Verbindungshülse (4) aus einem Metall oder einer Metalllegierung aufweist, durch die ein in den Stecker (3) eingeführter Endabschnitt des Lichtwellenleiters (5) hindurchgeführt ist und die mit dem Schutzrohr (2) verschweißt ist, und
- der Lichtwellenleiter (5) direkt mit dem Stecker (3) verbunden ist.

2. Temperatursensoranordnung (1) nach Anspruch 1, **dadurch gekennzeichnet, dass** die Verbindungshülse (4) über eine Crimpverbindung oder eine Schweißverbindung mit dem übrigen Stecker (3a) verbunden ist.

3. Temperatursensoranordnung (1) nach Anspruch 1 oder 2, **dadurch gekennzeichnet, dass** der Stecker (3) ein FC-Stecker oder ein APC-Stecker ist.

4. Temperatursensoranordnung (1) nach einem der Ansprüche 1 bis 3, **dadurch gekennzeichnet, dass** der Stecker (3) eine Ferrule aufweist, die mit einem temperaturbeständigen Klebstoff in dem Stecker (3) befestigt ist.

5. Temperatursensoranordnung (1) nach Anspruch 4, **dadurch gekennzeichnet, dass** der Klebstoff ein UV-aushärtender Klebstoff oder ein Zweikomponenten-Epoxidharz ist.

6. Temperatursensoranordnung (1) nach einem der Ansprüche 1 bis 5, **dadurch gekennzeichnet, dass** der Stecker (3) ein Knickschutzelement aus temperaturbeständigem Kunststoff aufweist.

7. Bauteil (6) für eine metallurgische Anlage, aufweisend wenigstens eine Sensorbohrung (8) und wenigstens eine zumindest teilweise in die Sensorbohrung (8) eingeführte Temperatursensoranordnung (1) zum Messen einer Temperatur eines die Sensorbohrung (8) aufweisenden Bauteilabschnitts (7) des Bauteils (6), **dadurch gekennzeichnet, dass** die Temperatursensoranordnung (1) nach einem der Ansprüche 1 bis 6 ausgebildet ist.

8. Bauteil (6) nach Anspruch 7, **dadurch gekennzeichnet, dass** die Sensorbohrung (8) derart ausgebildet ist, dass das in die Sensorbohrung (8) eingeführte Schutzrohr (2) durch einen Kontakt mit einer die Sensorbohrung (8) einfassenden Wandung (9) des Bauteilabschnitts (7) zumindest teilweise elastisch verformt ist.

9. Verfahren zum Herstellen einer Temperatursensoranordnung (1) zum Messen einer Temperatur eines Bauteilabschnitts (7) eines Bauteils (6) einer metallurgischen Anlage, aufweisend die Schritte:
- Herstellen eines Lichtwellenleiters (5) mit in Längsrichtung des Lichtwellenleiters (5) beabstandet zueinander an dem Lichtwellenleiter (5) ausgebildeten Faser-Bragg-Gittern;
- Herstellen eines Schutzrohrs (2) aus einem Metall oder einer Metalllegierung;
- Einführen des Lichtwellenleiter (5) mit radialem Spiel in das Schutzrohr (2); und
- Herstellen eines Steckers (3) zum Anschließen des Lichtwellenleiters (5) an eine optoelektrische Sensorelektronik;
**dadurch gekennzeichnet, dass**
- der Stecker (3) mit einer Verbindungshülse (4) aus einem Metall oder einer Metalllegierung hergestellt wird, durch die ein in den Stecker (3) eigeführter Endabschnitt des Lichtwellenleiters (5) hindurchgeführt wird und die mit dem Schutzrohr (2) verschweißt wird, und
- der Lichtwellenleiter (5) direkt mit dem Stecker (3) verbunden wird.

10. Verfahren nach Anspruch 9, **dadurch gekennzeichnet, dass** die Verbindungshülse (4) durch Laserschweißen mit dem Schutzrohr (2) verschweißt wird.

11. Verfahren nach Anspruch 9 oder 10, **dadurch gekennzeichnet, dass** das Schutzrohr (2) aus einem kalt gezogenen Material hergestellt wird.

12. Verfahren nach einem der Ansprüche 9 bis 11, **dadurch gekennzeichnet, dass** die Verbindungshülse (4) über eine Crimpverbindung oder eine Schweißverbindung mit dem übrigen Stecker (3a) verbunden wird.

## Claims

1. Temperature sensor arrangement (1) for measuring a temperature of a component section (7) of a component (6) of a metallurgical plant, comprising
- at least one optical waveguide (5) with fibre Bragg gratings constructed at the optical waveguide (5) at a mutual spacing in longitudinal direction of the optical waveguide (5),
- at least one protective tube (2) of a metal or a metal alloy which surrounds the optical waveguide (5) in encircling manner with radial play and which is introducible, together with the optical waveguide (5) inserted therein, into a sensor bore (8) at the component section (7), and
- at least one plug (3) for connecting the optical waveguide (5) with an optoelectrical sensor electronic system,
**characterised in that**
- the plug (3) comprises a connecting sleeve (4) of a metal or metal alloy, through which an end section - which is inserted into the plug (3) - of the optical waveguide (5) is guided and which is welded to the protective tube (2), and
- the optical waveguide (5) is directly connected with the plug (3).

2. Temperature sensor arrangement (1) according to claim 1, **characterised in that** the connecting sleeve (4) is connected with the rest of the plug (3a) by way of a crimp connection or a weld connection.

3. Temperature sensor arrangement (1) according to claim 1 or 2, **characterised in that** the plug (3) is an FC plug or an APC plug.

4. Temperature sensor arrangement (1) according to any one of claims 1 to 3, **characterised in that** the plug (3) has a ferrule which is secured in the plug (3) by a temperature-resistant adhesive.

5. Temperature sensor arrangement (1) according to claim 4, **characterised in that** the adhesive is an adhesive hardening under ultraviolet light or a two-component epoxy resin.

6. Temperature sensor arrangement (1) according to any one of claims 1 to 5, **characterised in that** the plug (3) has a kink protection element of temperature-resistant plastics material.

7. Component (6) for a metallurgical plant, having at least one sensor bore (8) and at least one temperature sensor arrangement (1), which is introduced at least partly into the sensor bore (8), for measuring a temperature of a component section (7), which has the sensor bore (8), of the component (6), **characterised in that** the temperature sensor arrangement (1) is constructed in accordance with any one of claims 1 to 6.

8. Component (6) according to claim 7, **characterised in that** the sensor bore (8) is formed in such a way that the protective tube (2) introduced into the sensor bore (8) is at least partly resiliently deformed by contact with a wall (9), which bounds the sensor bore (8), of the component section (7).

9. Method of producing a temperature sensor arrangement (1) for measuring a temperature of the component section (7) of a component (6) of a metallurgical plant, comprising the steps:
- producing an optical waveguide (5) with fibre Bragg gratings formed at the optical waveguide (5) at a mutual spacing in longitudinal direction of the optical waveguide (5);
- producing a protective tube (2) of a metal or a metal alloy;
- inserting the optical waveguide (5) with radial play into the protective tube (2); and
- producing a plug (3) for connecting the optical waveguide (5) with an optoelectrical sensor electronic system;
**characterised in that**
- the plug (3) is produced with a connecting sleeve (4) of a metal or metal alloy, through which an end section - which is inserted into the plug (3) - of the optical waveguide (5) is guided and which is welded to the protective tube (2), and
- the optical waveguide (5) is directly connected with the plug (3).

10. Method according to claim 9, **characterised in that** the connecting sleeve (4) is welded to the protective tube (2) by laser welding.

11. Method according to claim 9 or 10, **characterised in that** the protective tube (2) is produced from a cold-drawn material.

12. Method according to any one of claims 9 to 11, **characterised in that** the connecting sleeve (4) is connected with the rest of the plug (3a) by way of a crimp connection or a weld connection.

## Revendications

1. Agencement de capteur de la température (1) destiné à la mesure d'une température d'un tronçon de composant (7) d'un composant (6) d'une installation métallurgique, qui présente :
- au moins un guide d'onde optique (5) qui comprend des réseaux de Bragg sur fibres réalisés en étant disposés contre le guide d'onde optique (5), à l'écart les uns des autres dans la direction longitudinale du guide d'onde optique (5) ;
- au moins un tube de protection (2) constitué d'un métal ou d'un alliage métallique qui entoure de manière périphérique le guide d'onde optique (5) avec un jeu radial, tube qui peut être introduit de manière conjointe avec le guide d'onde optique (5) qui y a été incorporé, dans un alésage pour capteur (8) contre le tronçon de composant (7) ; et
- au moins un connecteur (3) destiné à raccorder le guide d'onde optique (5) à un dispositif électronique faisant office de capteur de type optoélectrique ;
**caractérisé**
- **en ce que** le connecteur (3) présente une douille de liaison (4) constituée d'un métal ou d'un alliage métallique, à travers laquelle est guidé un tronçon terminal du guide d'onde optique (5) qui a été incorporé dans le connecteur (3), et qui est soudée au tube de protection (2) ; et
- le guide d'onde optique (5) est relié directement au connecteur (3).

2. Agencement de capteur de la température (1) selon la revendication 1, **caractérisé en ce que** la douille de liaison (4) est reliée par l'intermédiaire d'une liaison par sertissage ou d'une liaison par soudage au reste du connecteur (3a).

3. Agencement de capteur de la température (1) selon la revendication 1 ou 2, **caractérisé en ce que** le connecteur (3) représente un connecteur de type FC ou un connecteur de type APC.

4. Agencement de capteur de la température (1) selon l'une quelconque des revendications 1 à 3, **caractérisé en ce que** le connecteur (3) présente une virole qui est fixée dans le connecteur à l'aide d'un adhésif qui résiste à la température.

5. Agencement de capteur de la température (1) selon la revendication 4, **caractérisé en ce que** l'adhésif représente un adhésif qui durcit par exposition au rayonnement ultraviolet ou une résine époxy du type à deux composants.

6. Agencement de capteur de la température (1) selon l'une quelconque des revendications 1 à 5, **caractérisé en ce que** le connecteur (3) présente un élément qui s'oppose au tortillement constitué par une matière synthétique qui résiste à la température.

7. Composant (6) destiné à une installation métallurgique, qui présente au moins un alésage pour capteur (8) et au moins un agencement de capteur de la température (1), qui a été introduit au moins en partie dans l'alésage pour capteur (8), destiné à la mesure d'une température d'un tronçon de composant (7) du composant (6) qui présente l'alésage pour capteur (8), **caractérisé en ce que** l'agencement de capteur de la température (1) est réalisé conformément à l'une quelconque des revendications 1 à 6.

8. Composant (6) selon la revendication 7, **caractérisé en ce que** l'alésage pour capteur (8) est réalisé d'une manière telle que le tube de protection (2) qui a été introduit dans l'alésage pour capteur (8) subit une déformation au moins en partie élastique par l'intermédiaire d'un contact avec une paroi (9) du tronçon de composant (7) qui intègre l'alésage pour capteur (8).

9. Procédé destiné à la fabrication d'un agencement de capteur de la température (1) destiné à la mesure d'une température d'un tronçon de composant (7) d'un composant (6) d'une installation métallurgique, qui présente les étapes suivantes dans lesquelles :
- on fabrique un guide d'onde optique (5) qui comprend des réseaux de Bragg sur fibres réalisés en étant disposés contre le guide d'onde optique (5), à l'écart les uns des autres dans la direction longitudinale du guide d'onde optique (5) ;
- on fabrique un tube de protection (2) qui est constitué d'un métal ou d'un alliage métallique ;
- on introduit le guide d'onde optique (5) avec un jeu radial dans le tube de protection (2) ; et
- on fabrique un connecteur (3) qui est destiné au raccordement du guide d'onde optique (5) à un dispositif électronique faisant office de capteur de type optoélectrique ;
**caractérisé par le fait que** :
- l'on fabrique le connecteur (3) avec une douille de liaison (4) à partir d'un métal ou d'un alliage métallique, à travers laquelle on guide un tronçon terminal du guide d'onde optique (5) qui a été introduit dans le connecteur (3) et que l'on soude au tube de protection (2) ; et
- on relie le guide d'onde optique (5) directement au connecteur (3).

10. Procédé selon la revendication 9, **caractérisé en ce que** l'on soude la douille de liaison (4) au tube de protection (2) par l'intermédiaire d'une soudure au laser.

11. Procédé selon la revendication 9 ou 10, **caractérisé en ce que** l'on fabrique le tube de protection (2) à partir d'une matière qui a été étirée à froid.

12. Procédé selon l'une quelconque des revendications 9 à 11, **caractérisé en ce que** l'on relie la douille de liaison (4) au reste du connecteur (3a) par l'intermédiaire d'une liaison par sertissage ou d'une liaison par soudage.
